# EUROPEAN PATENT SPECIFICATION

(11) **EP 2 163 926 B1**
(45) Date of publication and mention of the grant of the patent: **09.11.2011**
(21) Application number: 09169835.7
(22) Date of filing: 09.09.2009
(51) Int. Cl.: G02B 6/44

(54) **Holding system provided with a cassette comprising a holder for optical fibre connections**
Haltesystem ausgestattet mit einer Kassette mit einem Halter für Glasfaserverbindungen
Système de maintien comprenant une cassette ayant un maintien pour connections de fibres optiques

(30) Priority: 09.09.2008 NL 2001965; 09.09.2008 NL 2001968; 09.09.2008 NL 2001967; 09.09.2008 NL 2001966
(43) Date of publication of application: 17.03.2010
(73) Proprietor: Attema B.V., 4203 NJ Gorinchem (NL)
(72) Inventor: de Hoog, Antonie, 4213 DE Dalem (NL)
(74) Representative: Fluit, Jeroen

(56) References cited:
- EP-A1- 0 479 227
- EP-A2- 0 726 478
- US-A- 4 832 436
- US-A- 5 131 066
- US-A- 5 495 549
- US-A- 5 619 608
- US-A- 5 754 724
- US-A1- 2009 110 360

## Description

The present invention relates to a holding system provided with a cassette comprising a holder for holding optical fibre connections, wherein the holding system is provided with securing means for securing the cassette in a tilted position with respect to the holding system. Such a holding system is e.g. disclosed in US 5619608.

US 5131066-A and US5495549 also provide systems to secure splice trays with straps.

It is an object of the invention to provide an improved holding system.

According to an embodiment of the invention there is provided a holding system provided with a cassette comprising a holder for holding optical fibre connections wherein the cassette is provided with a half open ring for connecting securing means to the cassette and the holding system is provided with securing means for securing the cassette in a tilted position with respect to the holding system. The securing means comprise a strip for securing the cassette in a tilted position with respect to the holding system. The cassette may be secured in a tilted position by connecting the strip with the cassette via the half open ring of the cassette. The strip may comprise Velcro ™ and the half open ring may comprise extensions. The cassette may be provided with a channel for storing a surplus of optical fibres. The holder may comprise clamps for clamping at least two fibre connections parallel to a first direction. The holder may be provided with at least two clamps, each clamp comprising at least two clamp members for clamping a fibre connection in between, wherein at least two clamps for clamping neighbouring fibre connections comprise clamp members positioned in between the neighbouring fibre connection on a line in the first direction. The holder may be provided with at least one clamp comprising at least two clamp members for clamping a fibre connection in between, wherein the clamp is provided on a base and the base is provided with a hole in between the clamp members for pushing the fibre connections out of the clamp via the hole. The holding system may comprise a stop and a cassette carrier for holding at least one cassette. The cassette may be rotatably connectable to the holding system. The holding system may be provided with a mount for mounting the holding system to a rail. The rail may be a DIN or top hat rail.

Embodiments of the invention will be described, by way of example only, with reference to the accompanying schematic drawings in which corresponding reference symbols indicate corresponding parts, and in which:
Figure 1 and 2 depict a packaged optical fibre splice in accordance with the prior art;
Figure 3a is a view on a holder according to the invention provided with a cassette;
Figure 3b is an enlarged view on the part of the holder of figure 3a indicated by A;
Figure 3c discloses a three dimensional view on the holder 1 of figure 3A;
Figure 3d discloses a cross-section along the line G of the holder of figure 3c.
Figure 4a is a three dimensional view on the cassette, the holder and the clamps;
Figure 4b is a three dimensional view from the back side of the cassette;
Figure 5 is a view on multiple cassettes which are mounted with a holding system on a DIN or top hat rail;
Figure 6 is a view on multiple cassettes mounted in the holding system;
Figure 7 is a view on a cassette carrier, two stops and a DIN or top hat rail from the back side;
Figures 8a to 8c illustrate a method how a strip may be used to secure the cassette via the open ring;
Figures 9a to 9c illustrate an alternative method for securing the cassette with the strip; and,
Figures 10a and 10b disclose an alternative embodiment according to the invention.

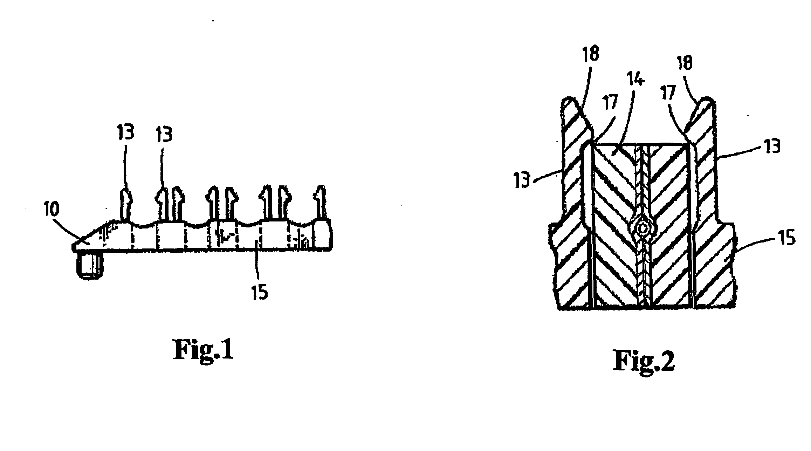

Patent publication EP0150568 (see Fig. 1 and 2) discloses a packaged optical fibre splice being held in a retainer 10 formed by two pairs of cantilever members 13 having inwardly facing ribs at their top edges. The members of a pair are spaced so that after pushing a packaged splice 14 between the ribs 17, deforming the members slightly, the packaged splice is freely positioned between the cantilever members which are substantially stress free. The splice is retained by the ribs 17.

A disadvantage of EP0150468 may be the size of the retainer 10. The size of the retainer is determined by the width of the packaged splice 14, the width of the two cantilever members 13 and space needed for the deformation of the two cantilever members 13, making the design bulky especially if multiple retainers are necessary.

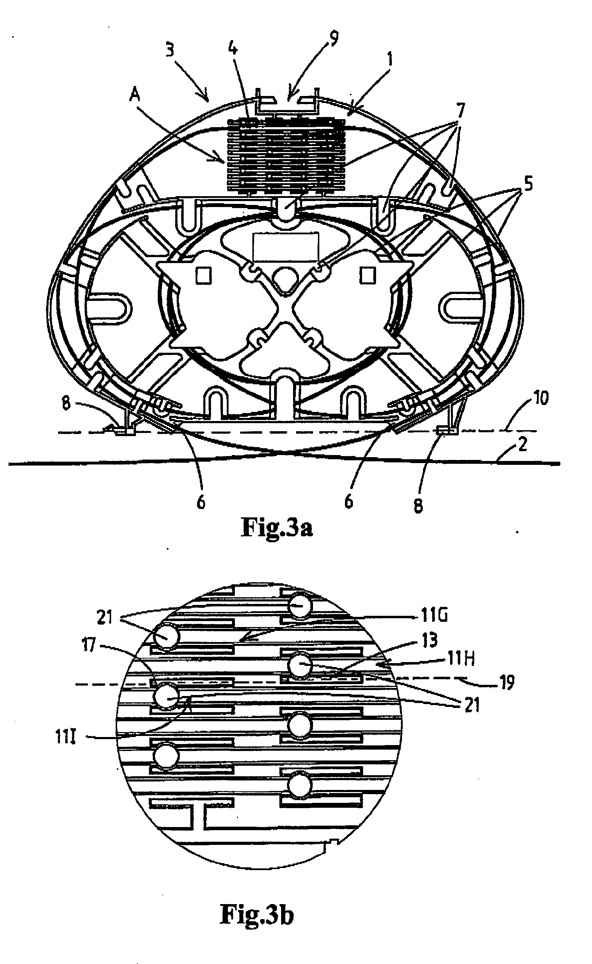

Figure 3a is a view on a holder 1 according to the invention provided with a cassette 3. The cassette 3 is provided with channels formed by walls 5 and protrusions 7 for storing a surplus of optical fibre 2 after an optical fibre is connected and the connection 4 is clamped in the holder 1. The channels may be of different lengths to accommodate different surpluses of optical fibre 2. The cassette 3 may be mounted on a cassette carrier with mounting extensions 8. The mounting extensions 8 allow the cassette to make small tilts with respect to the cassette carrier around a tilt axis 10. The small tilts may be as large as 90 degrees. The optical fibres may enter the cassette through the entrances 6 which are close to the tilt axis 10 so that tilting the cassette 3 only leads to a small torsion of the optical fibre 2 without a risk of damaging the fibres. The cassette 3 is also provided with an open ring 9 for positioning and/or securing the cassette in a cassette carrier.

Figure 3b discloses an enlarged view on the part of the holder of figure 3a indicated by A. The holder 1 is provided with clamps 11 G, each clamp being provided with two clamp members positioned opposite each other for clamping an optical fibre connection in between the clamp members. Two different clamps, for example 11 H and 11I for clamping neighbouring optical fibre connections have clamp members 13 and 17 being positioned in between the two neighbouring fibre connections, on a line 19 in the first direction which is parallel to the fibre connections it may clamp. By positioning two clamp members for clamping two neighbouring fibre connections in between the place where the neighbouring fibre connections will be clamped on a line parallel to the fibre connections the clamp members will take less space in a direction perpendicular to the first direction. The clamp members 13, 17 of the two different clamps 11H, 11G have a center which is shifted a small distance in a direction perpendicular to the line 19 towards the optical fibre connection it may clamp so as to provide space for deformation of the clamp member at the side opposite the side where the optical fibre connection is clamped. The pattern of the clamp members is repeated so that an alternating design of the clamp members is made. Between two clamp members a hole 21 is provided in the base of the clamp which can be used to push a fibre out of the clamp with a pin. In a clamp without holes a pair of tweezers may be used to get the fibre connection out of the clamp and this may damage the optical fibre connection.

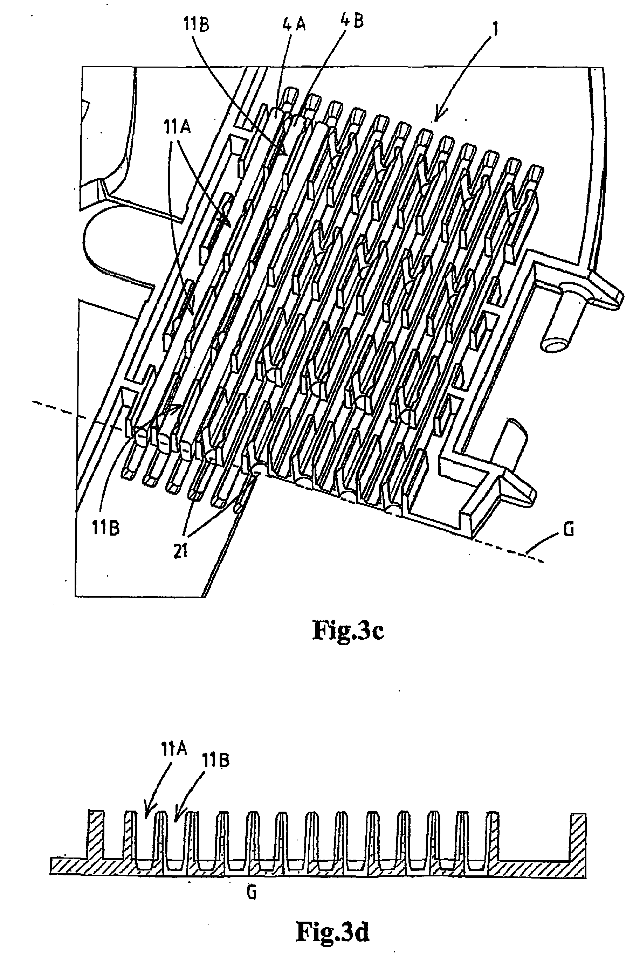

Figure 3c discloses a three dimensional view on the holder 1 with three optical fibre connections clamped therein and a cut away portion in the bottom right corner of the figure. Optical fibre connection 4A (as here depicted without fibre connected thereto) is clamped with two clamps 11A. By clamping the fibre connections 4A with two clamps 11A the fibre connection 4A can be clamped very stabile. Fibre connection 4B is clamped with two clamps 11 B as well. The cut away portion gives a good view on the hole 21 that is provided to the base of the clamps to make it possible to remove a fibre connection from a clamp by putting a pin in the hole 21.

Figure 3d discloses a cross-section along the line G of the holder of figure 3c. The cross-section shows clamps 11A, 11 B without an optical fibre connection in it. In the holder of the example twelve optical fibre connections can be clamped with each clamp having their own clamp members.

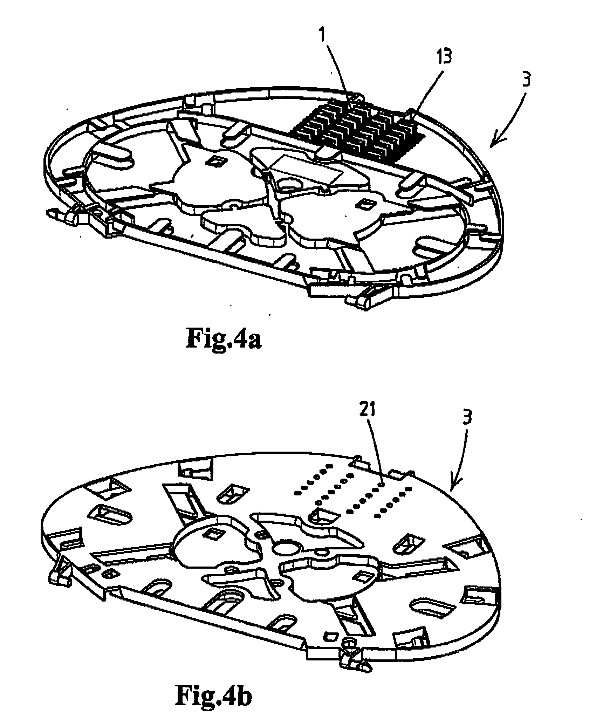

Figure 4a is a three dimensional view on the cassette 3, the holder 1 and the clamps 13. From the figure it can be seen that the cassette is made out of one piece of plastic.

Figure 4b is a three dimensional view on the backside of the cassette 3. The holes 21 in the back of the cassette 3 provide a space for a pin to eject the fibres from the clamps.

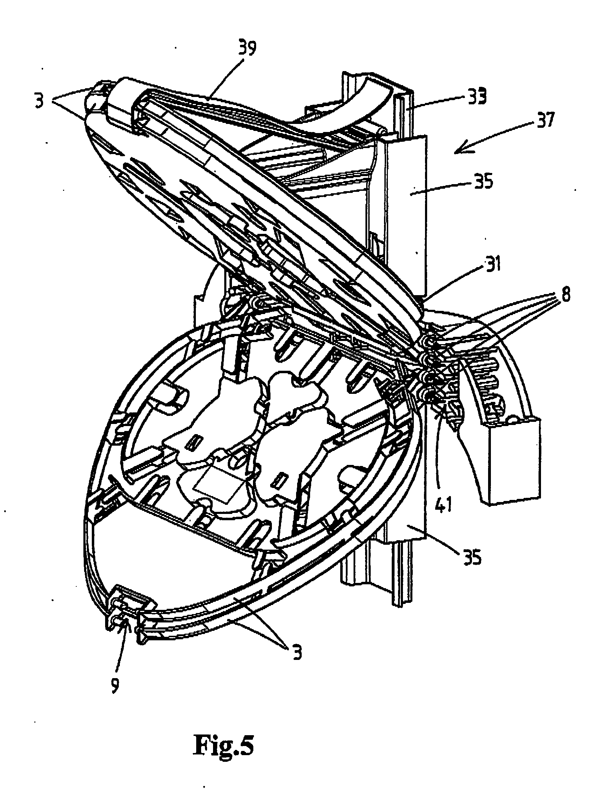

Figure 5 discloses multiple cassettes 3 which are mounted with a holding system 37 on a DIN or top hat rail 33. The holding system 37 comprises a cassette carrier 31 and two stops 35. The cassette carrier 31 is provided with multiple channels formed by walls 41 for providing guidance to the optical fibres to be guided to the cassettes 3 via the entrance 6 (see figure 3a) and the carrier comprises holes in which the mounting extensions 8 fit so as to connect the cassette 3 with the cassette carrier 31 in a way that the cassette 3 can tilt with respect to the cassette carrier 31. The cassette carrier is further provided with a mount for mounting the cassette carrier 31 on the rail 33. The stops 35 may be used to keep the cassettes 3 in an open position so that a mechanic has more easily assess to the fibres and provides a maximum to the tilt of the cassettes 3. The stop may be provided with a strip 39, for example comprising Velcro ™ to secure the cassette 3 in a tilted position to the stop 35 and the rail 33. The stops 35 may be provided with an inclined surface with, for example an inclination of 45 degrees, so that the cassettes 3 can be positioned in a tilted position against the stops 35. To make it easy to connect the strip 39 to the cassette 3 the open ring 9 is provided to the cassette 3.

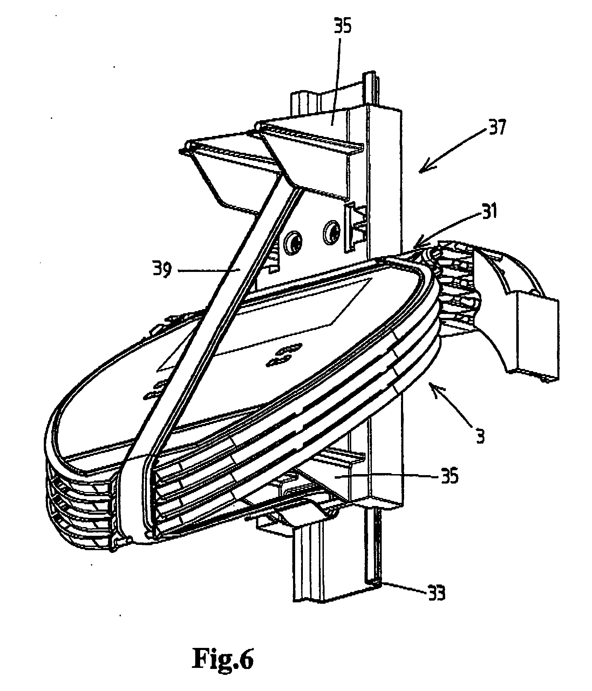

Figure 6 illustrates multiple cassettes 3 mounted in the holding system 37 on the rail 33 via cassette carrier 31. All cassettes are closed and fixed on their position in the holding system with the strip 39 of Velcro™ and the stops 35.

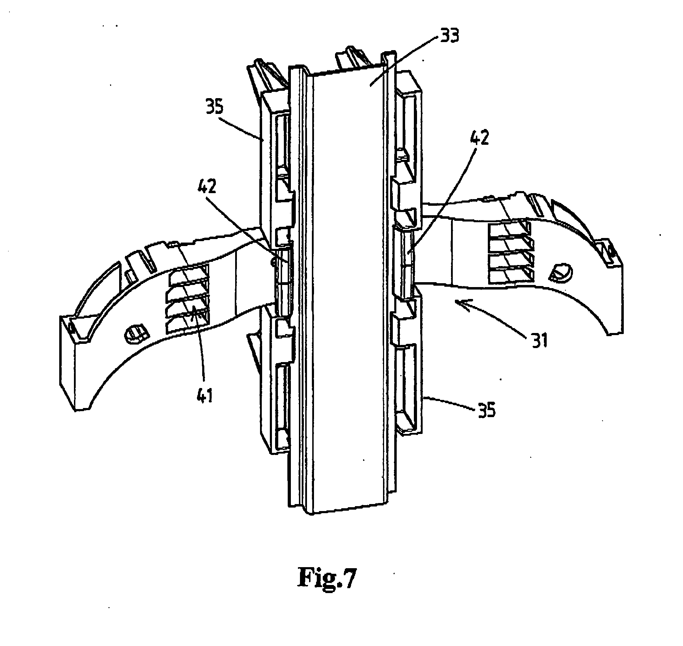

Figure 7 illustrates a cassette carrier 31, two stops 35 and a DIN or top hat rail 33 from the back side. The multiple cannels formed by walls 41 that are used to guide the optical fibres through the carrier to the cassettes have a slightly circular shape so as to protect the optical fibres for sharp bends. The mount 42 that is provided to the cassette carrier 31 on both sides of the rail 33 is designed to clamp the cassette carrier on the rail 33.

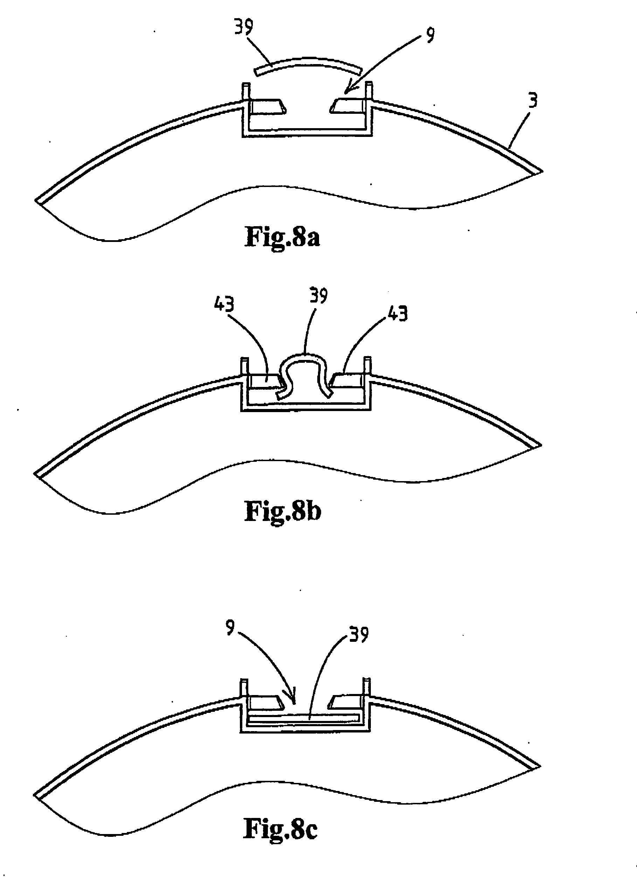

Figures 8a to 8c illustrate a method how the strip of, for example Velcro ™ 39 may be used to secure the cassette 3 via the open ring 9. The strip is bended a little by the mechanic so that it is less wide (see Fig. 8a). The strip is pushed past the open ring extensions 43 into the open ring 9 (Fig. 8b) and subsequently the strip is relaxed so that it expands again to a straight form and the strip of Velcro ™ secures the cassette 3. By bending the strip now in a direction perpendicular to the direction the strip was bended in Figure 8a and 8b, for example around the extensions 43, the strip can be secured against bending in the other direction so that it will not move out of the open ring 9. Alternatively, a closed ring can be used, but the mechanic than has to put the point of the strip through the ring 9 of the cassette 3 very precisely which costs more time than the above described method.

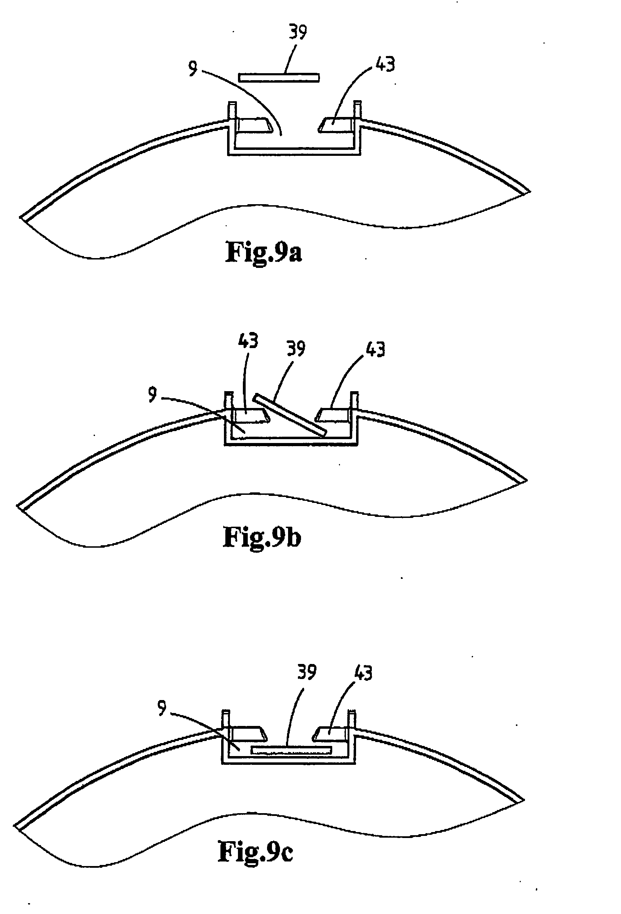

Figures 9a to 9c illustrate an alternative method for securing the cassette with the strip. The strip 39 may be tilted a little to get the strip passed the extensions 43 (see figure 9b). If the strip has passed the extensions the strip is tilted back to its initial position and the strip is within the open ring 9. By bending the strip 39 around the extensions 43 in a similar way as described in relation to Figures 8a to 8c the strip may be secured so that it will not move out of the open ring 9.

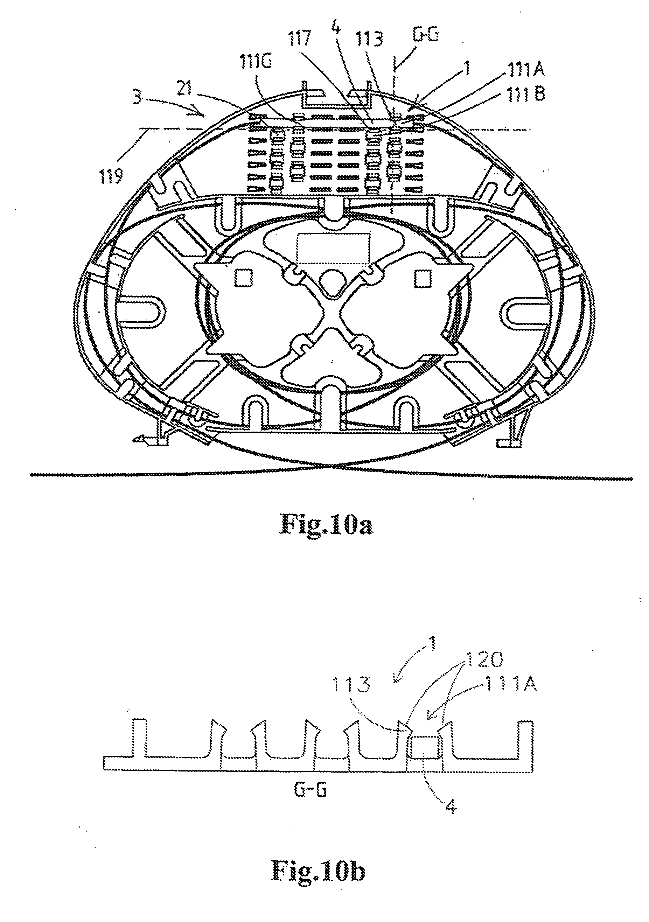

Figures 10a and 10b disclose a cassette 3 which is similar to the cassette of figure 3 but has a different holder 1. Figure 10a discloses a top view and figure 10b discloses a cross-section along line G-G in figure 10a. The holder 1 is provided with clamp 111A, each clamp comprising clamp members being positioned opposite each other for clamping an optical fibre connection 21 in between the clamp members. Two neighbouring clamps, for example 111A and 111 B for clamping neighbouring optical fibre connections 21 have clamp members 113 and 117 positioned on a line parallel to the optical fibre connection 119. The clamp members 113, 117 of the two neighbouring clamps 111 A, 111 B have a center which is shifted a small distance in a direction perpendicular to the line 119 towards the optical fibre connection it may clamp so as to provide space for deformation of the clamp member when the optical fibre connection is clamped. The clamp members are further provided with a cam 120 (only visible in figure 10b) for securing the optical fibre connection in the clamps. Between the clamp members a hole 21 in the form of a square is provided so as to allow the installation engineer to push the optical fibre out of the clamp via the hole 21. The pattern of the clamps is repeated so that an alternating design of the clamp members is made. In this way less space for the clamp members is used. In a clamp without hole a pair of tweezers may be used to get the fibre connection out of the clamp and this may damage the optical fibre connection. The fibre connection 4 is clamped by two different clamps 111A and 111G, the clamps in the holder 1 are configured so that each fibre connection is clamped by two clamps. The distance between the clamps 111G and 111A is equal to the distance between other clamps that together have to clamp a different fibre connection. In the configuration of figure 3a the distance between the clamps clamping a fibre connection may vary for different fibre connections.

The present invention may be embodied in other specific forms without departing from its essential characteristics. The described embodiments are to be considered in all respects only as illustrative and not restrictive.

## Claims

1. A holding system (37) provided with a cassette (3) comprising a holder (1) for holding optical fibre connections wherein the holding system is provided with securing means for securing the cassette in a tilted position with respect to the holding system, the securing means comprising a strip (39) for securing the cassette in a tilted position with respect to the holding system **characterized in that** the cassette is provided with a half open ring (9) for connecting the securing means to the cassette, by connecting the strip with the cassette via the half open ring of the cassette.

2. The holding system according to claim 1, wherein the strip (39) comprises Velcro ™.

3. The holding system according to any of the preceding claims, wherein the half open ring comprises extensions (43).

4. The holding system according to any of the preceding claims, wherein the cassette is provided with a channel for storing a surplus of optical fibres (2).

5. The holding system according to any of the preceding claims, wherein the holder comprises clamps (11 G) for clamping at least two fibre connections parallel to a first direction.

6. The holding system according to any of the preceding claims, wherein the holder (1) is provided with at least two clamps (11 G), each clamp comprising at least two clamp members (13, 17) for clamping a fibre connection in between, wherein at least two clamps for clamping neighbouring fibre connections comprise clamp members positioned in between the neighbouring fibre connection on a line (19) in the first direction.

7. The holding system according to any of the preceding claims, wherein the holder (1) is provided with at least one clamp (11 G) comprising at least two clamp members (13, 17) for clamping a fibre connection in between, wherein the clamp is provided on a base and the base is provided with a hole (21) in between the clamp members for pushing the fibre connections out of the clamp via the hole.

8. The holding system according to any of the preceding claims, wherein the holding system comprises a stop (35) and a cassette carrier (31) for holding the cassette (3).

9. The holding system according to any of the preceding claims, wherein the cassette (3) is rotatably connectable to the holding system.

10. The holding system according to any of the preceding claims, wherein the holding system is provided with a mount for mounting the holding system to a rail (33).

11. The holding system according to claim 10, wherein the mount is constructed and arranged for mounting the holding system to a DIN or top hat rail.

## Patentansprüche

1. Haltesystem (37), das mit einer Kassette (3) versehen ist, die einen Halter (1) zum Halten von Lichtleitfaserverbindungen enthält, wobei das Haltesystem mit Befestigungsmitteln versehen ist, um die Kassette in einer in Bezug auf das Haltesystem geneigten Position zu befestigen, wobei die Befestigungsmittel ein Band (39) zum Befestigen der Kassette in einer in Bezug auf das Haltesystem geneigten Position umfassen, **dadurch gekennzeichnet, dass** die Kassette mit einem halben offenen Ring (9) versehen ist, um durch Verbinden des Bandes mit der Kassette mittels des halben offenen Rings der Kassette die Befestigungsmittel mit der Kassette zu verbinden.

2. Haltesystem nach Anspruch 1, wobei das Band (39) Velcro™ umfasst.

3. Haltesystem nach einem der vorhergehenden Ansprüche, wobei der halbe offene Ring Verlängerungen (43) aufweist.

4. Haltesystem nach einem der vorhergehenden Ansprüche, wobei die Kassette mit einem Kanal versehen ist, um überschüssige Lichtleitfaser (2) aufzunehmen.

5. Haltesystem nach einem der vorhergehenden Ansprüche, wobei der Halter Klemmen (11G) umfasst, um wenigstens zwei Faserverbindungen parallel zu einer ersten Richtung festzuklemmen.

6. Haltesystem nach einem der vorhergehenden Ansprüche, wobei der Halter (1) mit wenigstens zwei Klemmen (11G) versehen ist, wobei jede Klemme wenigstens zwei Klemmelemente (13, 17) aufweist, um dazwischen eine Faserverbindung festzuklemmen, wobei wenigstens zwei Klemmen zum Festklemmen benachbarter Faserverbindungen Klemmelemente umfassen, die zwischen der benachbarten Faserverbindung in einer Linie (19) in der ersten Richtung positioniert sind.

7. Haltesystem nach einem der vorhergehenden Ansprüche, wobei der Halter (1) mit wenigstens einer Klemme (11G) versehen ist, die wenigstens zwei Klemmelemente (13, 17) aufweist, um dazwischen eine Faserverbindung festzuklemmen, wobei die Klemme auf einer Basis vorgesehen ist und die Basis mit einem Loch (21) zwischen den Klemmelementen versehen ist, um die Faserverbindungen durch das Loch aus der Klemme zu schieben.

8. Haltesystem nach einem der vorhergehenden Ansprüche, wobei das Haltesystem einen Anschlag (35) und einen Kassettenträger (31) zum Halten der Kassette (3) umfasst.

9. Haltesystem nach einem der vorhergehenden Ansprüche, wobei die Kassette (3) mit dem Haltesystem drehbar verbunden werden kann.

10. Haltesystem nach einem der vorhergehenden Ansprüche, wobei das Haltesystem mit einer Halterung versehen ist, um das Haltesystem an einer Schiene (33) zu montieren.

11. Haltesystem nach Anspruch 10, wobei die Halterung konstruiert und ausgelegt ist, um das Haltesystem an einer DIN- oder Hutschiene zu montieren.

## Revendications

1. Système de maintien (37) muni d'une cassette (3) comprenant un support (1) pour maintenir des connexions à fibres optiques, dans lequel le système de maintien est muni de moyens de fixation, pour fixer la cassette en une position inclinée par rapport au système de maintien, les moyens de fixation comprenant une bande (39) pour fixer la cassette en une position inclinée par rapport au système de maintien, **caractérisé en ce que** la cassette est munie d'un demi anneau ouvert (9), pour connecter les moyens de fixation à la cassette, par connexion de la bande à la cassette, via le demi anneau ouvert de la cassette.

2. Système de maintien selon la revendication 1, dans lequel la bande (39) comprend du Velcro™.

3. Système de maintien selon l'une quelconque des revendications précédentes, dans lequel le demi anneau ouvert comprend des extensions (43).

4. Système de maintien selon l'une quelconque des revendications précédentes, dans lequel la cassette est munie d'un canal pour stocker un surplus de fibres optiques (2).

5. Système de maintien selon l'une quelconque des revendications précédentes, dans lequel le support comprend des pinces (11G) pour serrer au moins deux connexions à fibres, parallèlement à une première direction.

6. Système de maintien selon l'une quelconque des revendications précédentes, dans lequel le support (1) est muni d'au moins deux pinces (11G), chaque pince comprenant au moins deux éléments de pince (13, 17), pour serrer entre eux une connexion à fibres, dans lequel au moins deux pinces pour serrer des connexions à fibres voisines comprennent des éléments de pince positionnés en position intermédiaire avec la connexion à fibres voisine sur une ligne (19) dans la première direction.

7. Système de maintien selon l'une quelconque des revendications précédentes, dans lequel le support (1) est muni d'au moins une pince (11G), comprenant au moins deux éléments de pince (13, 17), pour serrer entre eux une connexion à fibres, dans lequel la pince est prévue sur une base et la base est munie d'un trou (21) entre les éléments de pince, pour pousser les connexions à fibres hors de la pince, via le trou.

8. Système de maintien selon l'une quelconque des revendications précédentes, dans lequel le système de maintien comprend une butée (35) et un support à cassette (31), pour maintenir la cassette (3).

9. Système de maintien selon l'une quelconque des revendications précédentes, dans lequel la cassette (3) est susceptible d'être connectée à rotation au système de maintien.

10. Système de maintien selon l'une quelconque des revendications précédentes, dans lequel le système de maintien est muni d'une monture pour monter le système de montage sur un rail (33).

11. Système de maintien selon la revendication 10, dans lequel la monture est construite et agencée pour le montage du système de maintien sur un rail DIN ou rail profilé chapeau.
